# EUROPEAN PATENT SPECIFICATION

(11) **EP 0 875 336 B1**
(45) Date of publication and mention of the grant of the patent: **28.11.2001**
(21) Application number: 98107935.3
(22) Date of filing: 30.04.1998
(51) Int. Cl.: B23Q 7/03, B23Q 7/04, B23Q 7/14, B23Q 5/36, B23Q 5/50, B23Q 7/00

(54) **Apparatus for moving an item in a working machine**
Vorrichtung zur Bewegung eines Gegenstands einer Arbeitsmaschine
Dispositif de déplacement d'un objet dans une machine de travail

(30) Priority: 01.05.1997 DK 50097
(43) Date of publication of application: 04.11.1998
(73) Proprietor: Nielsen, Christian Öllegaard, 6000 Kolding (DK)
(72) Inventor: Nielsen, Christian Öllegaard, 6000 Kolding (DK)
(74) Representative: Gregersen, Niels Henrik

(56) References cited:
- EP-A- 0 376 246
- EP-A- 0 920 952
- US-A- 4 496 280
- US-A- 4 509 638

## Description

The present invention relates to an apparatus for moving an item in a working machine and of the type mentioned in the introductory part of claim 1.

From DE-A1-37 22 180 an apparatus system for step by step moving of items in a working machine is known, which apparatus system requires rather much space and has an extremely complicated construction.

From DE-A1-27 52 654 a machine tool with a device for linear transport of items on pallets is furthermore known, which apparatus for each working station comprises a pallet-guiding with a number of positioning members for positioning and fixing of the items in fixed positions. The machine tool comprises furthermore a pallet transfer device comprising an endless chain path.

Generally it applies that known apparatuses of the mentioned type are so extensive and complicated, that they have to be mounted on special machine consoles next to the working machine, for instance a pressing machine or a punching machine, which often means extra need of space at both sides of the machine.

The invention has for its purpose to provide an apparatus for moving an item in working machines and of the type mentioned in the introductory part, and which by means of simple provisions may be produced so compact, that the apparatus may be mounted directly on the tool plane, and that it becomes possible to obtain a precise and quick moving of items between a number of working stations.

The apparatus according to the invention is distinctive in that said transport member consists of an endless roller chain, which is arranged around said turning means in form of chain wheels, a chain tightener mechanism and a driving wheel connected with said servo motor, that said opening is formed by a guide slot extending along the roller chain, and that said carrier means are such connected with the roller chain, that the carrier means are able to pass the turning means and transfer the rotation of the servo motor via said linear guidance to preferably combined linear movements of said projecting tools. By means of simple provisions the apparatus may be produced so compact, that it can be mounted directly on the tool plane, and it becomes possible to obtain a precise and quick moving of items between a number of working stations.

Appropriately the apparatus according to the invention is such provided that the endless roller chain consists of a strong duplex chain arranged around duplex chain wheels, that said driving wheel consists of a duplex pinion wheel, and that the servo motor consists of a so-called step motor.

In order to obtain a very stable movement of the carrier means the apparatus according to the invention may advantageously be such provided, that said carrier means comprise a guide pin co-operating with a guide slot and connected with a roller chain by means of a clamp member, which partly surrounds the roller chain, and being adapted to be securing by clamping around a chain link of the roller chain from the external side thereof - on level with said guide slot.

The apparatus according to the invention may appropriately be such provided, that said guide slot mainly is U-shaped, as it has a preferably uppermost, horizontal intermediate stretch, two curved intermediate stretches and two vertical intermediate stretches.

For use by moving broad items it may be extraordinary advantageously that the apparatus according to claim 1 is such provided, that it consists of two preferably uniform housings, of which the backmost housing preferably is laterally reversed, where the driving wheels are mutually connected by means of an intermediate shaft, as the double apparatus is driven by a common servo motor.

The invention is further explained in the following with the drawing, in which:
- Fig. 1: shows a plane view - partly in section - of an embodiment for an apparatus according to the invention - seen from the side,
- Fig. 2: shows a view - partly in section - of the apparatus shown in Fig. 1 - seen from the top,
- Fig. 3A: shows a plane side view - partly in section - of an embodiment for a clamp member to the apparatus according to the invention,
- Fig. 3B: shows a plane view - partly in section - of the clamp member shown in Fig. 3A,
- Fig. 3C: shows a plane end view - of the clamp member shown in Fig. 3A,
- Fig. 4A: show a plane view of an embodiment for a carrier housing to the apparatus according to the invention,
- Fig. 4B: shows a plane side view - partly in section - of the carrier house shown in Fig. 4A,
- Fig. 5A: shows a plane view - partly in section - of a second embodiment for an apparatus according to the invention - seen from the side,
- Fig. 5B: shows a view - partly in section of the apparatus shown in Fig. 5A - seen from the top,
- Fig. 6A: shows a plane view - partly in section - of a third and prefered embodiment for an apparatus according to the invention - seen from the side,
- Fig. 6B: shows a view - partly in section of the apparatus shown in Fig. 6A - seen from the top,
- Fig. 6C: shows a plane side view - of the apparatus shown in Fig. 6A,
- Fig. 7A: shows a plane view - partly in section - of an apparatus according to the invention corresponding to the apparatus shown in Fig. 1, but cf. 7B is double,
- Fig. 7B: shows two mutual laterally reversed apparatuses - partly in section - namely a double apparatus of the embodiment shown in Figs. 1 and 2, where both apparatuses are driven by a common servo motor and an intermediate shaft,
- Fig. 8A: shows a plane view of an apparatus cf. Fig. 1, which is mounted on a tool plane and cooperating with a linear guidance displaceable both in a horizontal and in a vertical direction.
- Fig. 8B: shows the apparatus and linear guidance shown in Fig. 8A - seen from the top,
- Fig. 9: shows a plane top view of a tool plane, which is mounted with an apparatus cf. Fig. 1 according to the invention,
- Fig. 10: shows a plane side view of two belonging tool plane, where the lowermost tool plane is mounted with an apparatus according to the invention.
- Fig. 11: shows a perspective view of two belonging tool plane cf. Fig. 10 and with an apparatus according to the invention, while
- Fig. 12: shows a perspective view from the opposite side of the tool planes shown in Fig. 11 with an apparatus according to the invention.

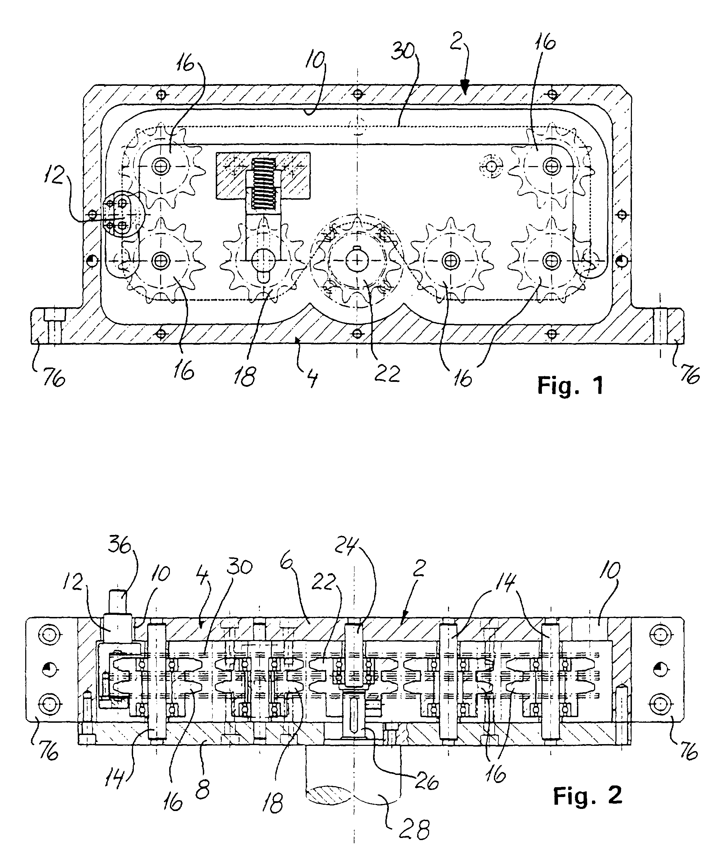

The apparatus 2 shown in Figs. 1 and 2 comprises a housing 4 with a back wall 6 and a detachable front wall 8. In the back wall 6 of the housing 4 a milled through U-shaped guide slot 10 is provided, in which a carrier means 12 is controlled. Between the front wall 8 and the back wall 6 of the housing five fixed turning chain wheels 16 and a springy turning chain wheel 18 are arranged by shafts 14, which turning chain wheel 18 together with a spring arrangement 20 forms a chain tightener mechanism, and a central chain wheel 22. All chain wheels 16, 18, 22, which are dublex chain wheels, are arranged on the shafts 14 by ball bearings.

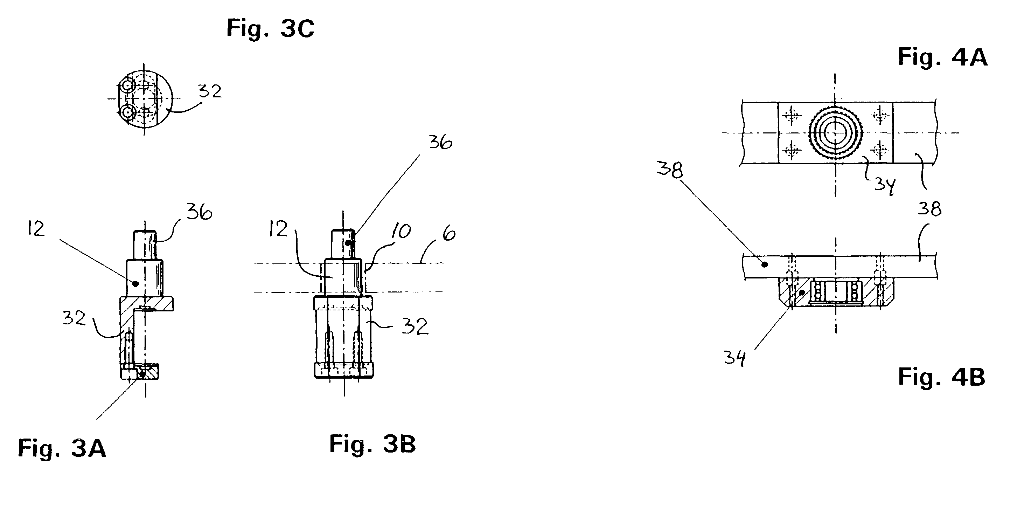

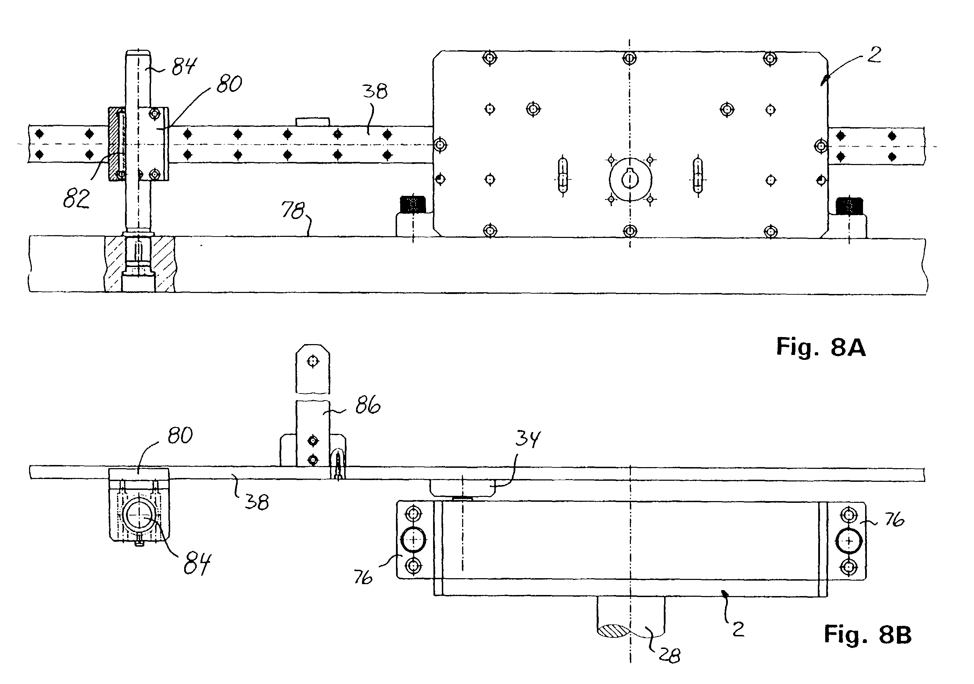

The driving wheel 22 is arranged partly on a short shaft 24, the opposite end of which is fastened in the back wall 6, and partly on a drive shaft 26 of a servo motor 28, which is mounted on the detachable front wall 8. A strong dublex roller chain 30 is mounted around the respective chain wheels 16, 18 and 22 in such a manner, that the middle of the roller chain follows the center line of the U-shaped guide slot 10 in the back wall 6. The carrier means 12, which is controlled in the guide slot 10, is secured external on the roller chain 30 by means of a special clamping fitting 32, which is shown in details in Figs. 3A - 3C. In Figs. 4A and 4B a carrier housing 34 is shown, in which a carrier tap 36 of the carrier means 12 is engaging, as the carrier housing 34 is secured on the side of a linear guidance 38 (Fig. 8B).

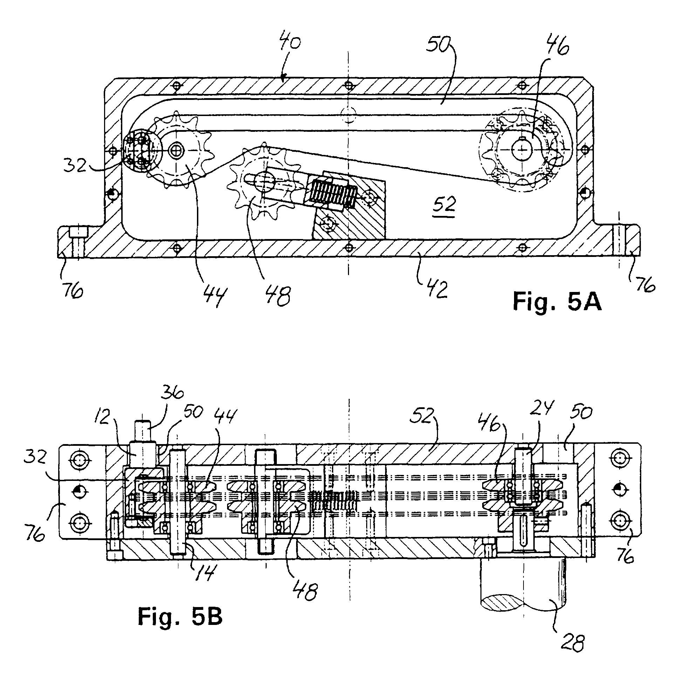

In Figs. 5A and 5B an other embodiment for an apparatus 40 according to the invention is shown with a housing 42, in which only one turning chain wheel 44 is provided, a combined turning and driving wheel 46 and a chain tightener mechanism 48. A guide slot 50 in the back wall 52 is corresponding shorter. By this apparatus 40 a lower building height and a mainly horizontal movement is obtained.

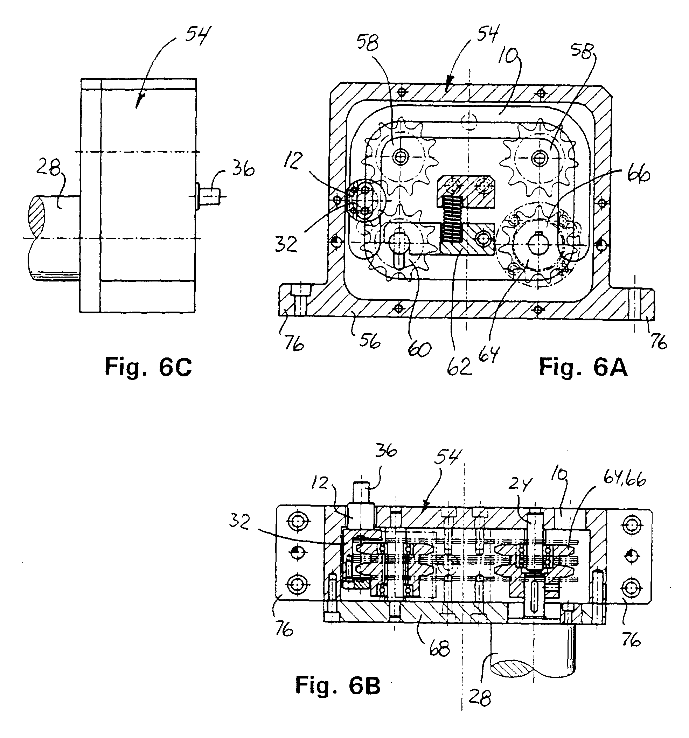

A preferred embodiment for an apparatus 54 according to the invention is shown in Figs. 6A - 6C, which apparatus 54 comprises a housing 56 having two regular turning chain wheels 58. Lowermost to the left of Fig. 6A a turning chain wheel 60 is seen, which is combined with a central chain tightener mechanism 62; while a turning chain wheel 64 lowermost to the right is combined with a driving wheel 66, which again is connected with a servo motor 28 being mounted on a front wall 68.

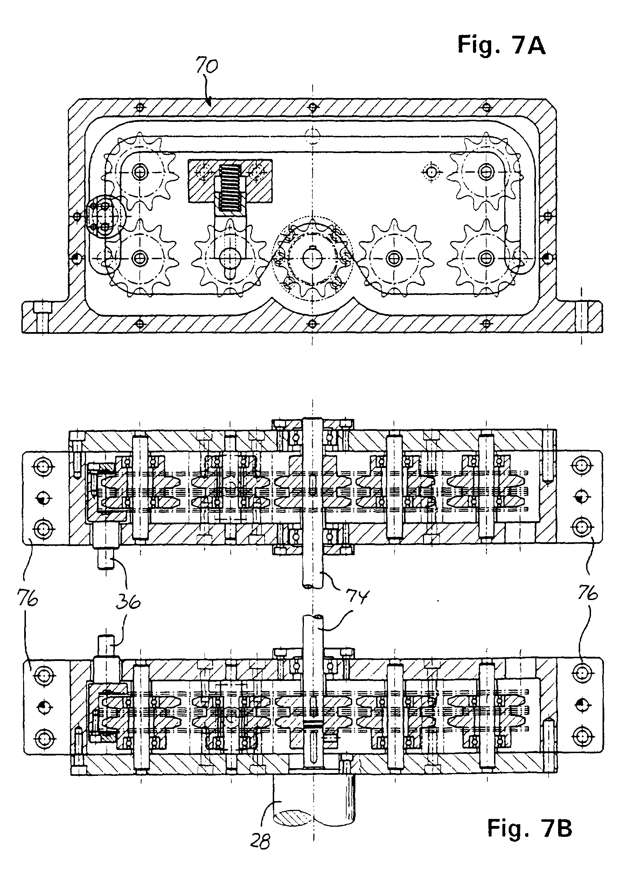

For moving broad items betwen the working positions in a working machine two mutual laterally reversed apparatuses 70 cf. Figs. 7A and 7B can be used, which in principle corresponds to the apparatus 2 shown in Figs. 1 and 2; but of course two laterally reversed apparatuses cf. Figs. 6A - 6C may also be used. The carrier taps 72 of the two apparatuses 70 are moved synchronously, as both apparatuses 70 are mutual connected with an intermediate shaft 74 and driven by a common servo motor 28.

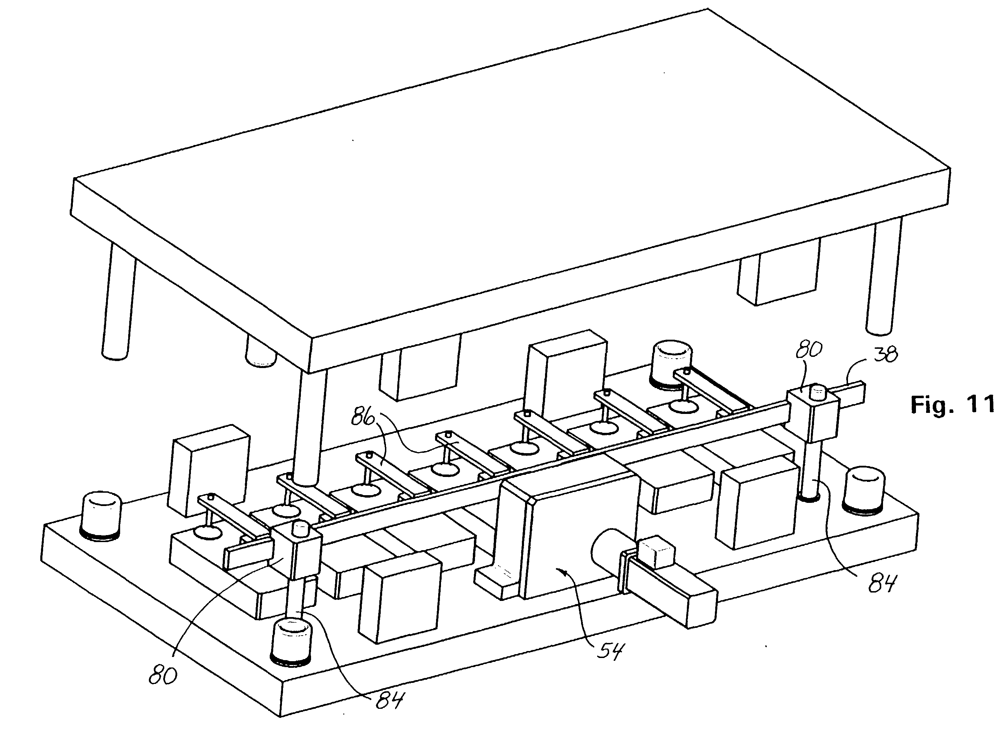

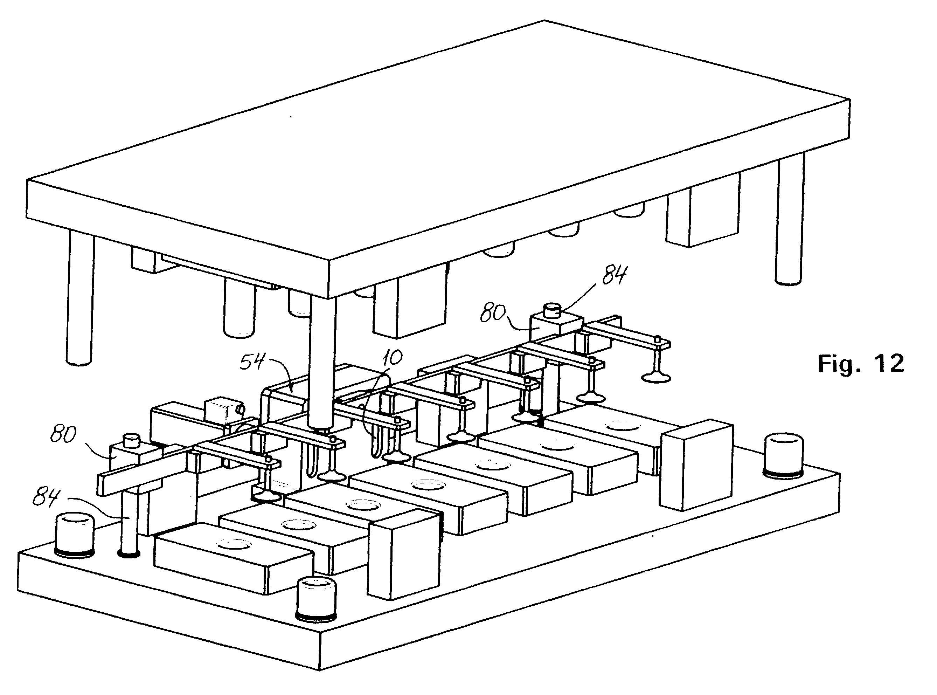

Common to the described apparatus is, that the housings comprise lowermost connecting flanges 76 serving for mounting of the apparatuses directly on a tool plane 79 (Figs. 8A, 9 - 12).

In Figs. 8A and 8B is shown, how an appartus 2 according to the invention is mounted directly on the tool plane 78 and how the apparatus 2 operates with the linear guidance 38, which in a known manner is such controlled by means of carriages 80, ball guidances 82 and pillars 84, that projecting transfer arms 86 may be moved in vertical and horizontal directions.

In other words the rotating movements of the servo motor is hereby transformed to the wanted vertical and horizontal transfer movement of items comprising collecting, bringing and pause positions.

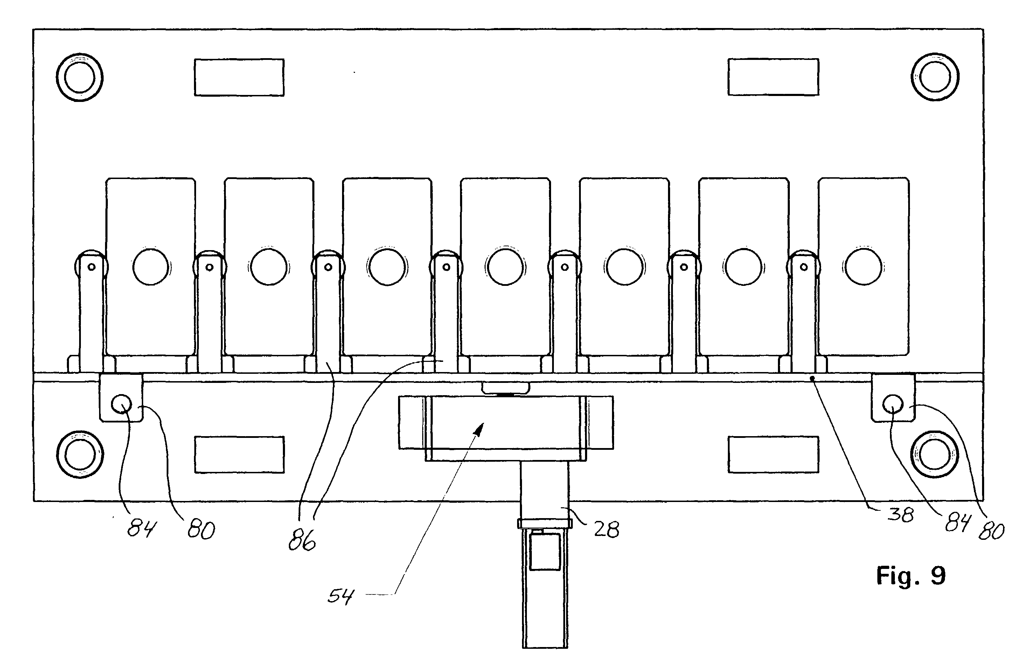

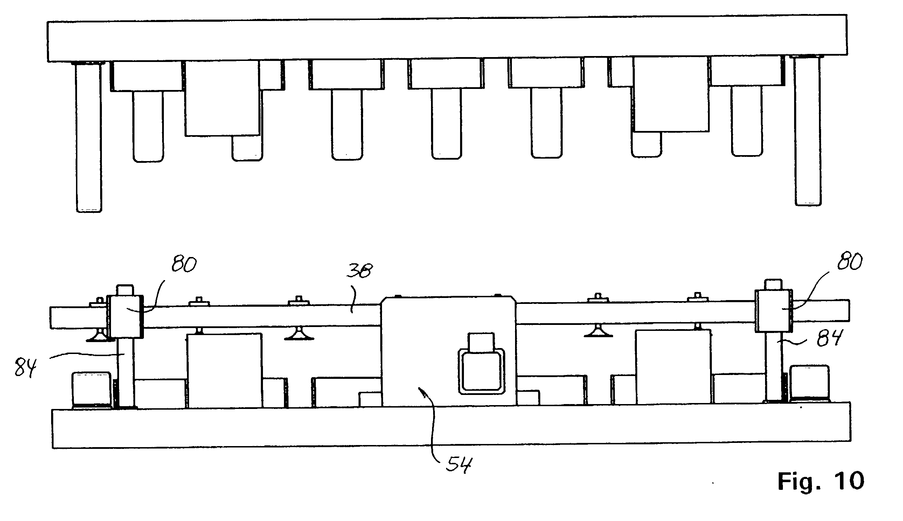

In Fig. 9 is shown, how a preferred apparatus 54 is mounted on the tool plane 78 and co-operates with a linear guidance 38 with projecting transfer arms 86, which in the shown situation are placed in pause position, that is that the transfer arms 86 are parked between the tools. Figs. 10 - 12 should explain themselves.

## Claims

1. An apparatus (2, 40, 54) for moving an item in a working machine and comprising a housing (4) with mutual parallel front and back walls (6, 8), between which turning means (16, 44, 58) for a transport member (30) with carrier means (12, 36) are arranged, which preferably via an opening (10) in the back wall (6) are drive-connected with a linear guidance (38) displaceable in horizontal and vertical directions, having a number of projecting tools adapted for moving of items, and a servo motor (28) preferably mounted at the front wall (8), ***characterized* in that** said transport member consists of an endless roller chain (30), which is arranged around said turning means in form of a chain wheel (16), a chain tightener mechanism (18) and a driving wheel (22) connected with said servo motor (28), that said opening is formed by a guide slot (10) extending along the roller chain (30), and that said carrier means (12, 36) are such connected with the roller chain (30), that the carrier means (12, 36) are able to pass the turning means and transfer the rotation of the servo motor via said linear guidance (38) to preferably combined linear movements of said projecting tools.

2. An apparatus according to claim 1, ***characterized* in that** the endless roller chain (30) consists of a strong duplex chain arranged around duplex chain wheel (16), that said driving wheel consists of a duplex pinion wheel (22), and that the servo motor (28) consists of a so-called step motor.

3. An apparatus according to claim 1, ***characterized* in that** said carrier means comprise a guide pin (12) co-operating with a guide slot (10) and connected with a roller chain (30) by means of a clamp member (32), which partly surrounds the roller chain (30), and being adapted to be securing by clamping around a chain link of the roller chain (30) from the external side thereof - on level with said guide slot (10).

4. An apparatus according to claim 1 - 3, ***characterized* in that** said guide slot (10) mainly is U-shaped, as it has a preferably uppermost, horizontal intermediate stretch, two curved intermediate stretches and two vertical intermediate stretches.

5. An apparatus according to claim 1, ***characterized* in that** it consists of two preferably uniform housings, of which the backmost preferably is laterally reversed, where the driving wheels are mutually connected by means of an intermediate shaft (74), as the double apparatus is driven by a common servo motor (28).

## Patentansprüche

1. Vorrichtung (2, 40, 54) zur Bewegung eines Gegenstandes in einer Arbeitungsmaschine, und die einen Kasten (4) mit gegenseitigen parallelen Vor- und Hinterwänden (6, 8) umfasst, zwischen denen Umsteuerungskörper (16, 44, 58) für ein Transportelement (30) mit Trägermitteln (12, 36) angeordnet sind, die vorzugsweise durch eine Öffnung (10) in der Hinterwand (6) antriebverbunden mit einer in senkrechter und horizontaler Richtung verschiebbaren linearen Führung (38), die eine Anzahl von vorspringenden Werkzeugen hat, die an das Bewegen von Elementen angepasst sind, und einen Servomotor (28), der vorzugsweise bei der Vorwand (8) angebracht ist, **dadurch gekennzeichnet, dass** das erwähnte Transportelement aus einer endlosen Rollenkette (30) besteht, die um die erwähnten Umsteuerungskörper angeordnet ist, in der Form eines Kettenrades (16), eines Mechanismus (18) zum Anziehen des Rades, und eines Antriebsrades (22), das mit dem erwähnten Servomotor verbunden ist (28), dass die erwähnte Öffnung von einer Führungsnot (10) gebildet ist, die sich entlang der Rollenkette (30) verlängert, und dass die Trägermittel (12, 36) mit der Rollenkette (30) derart verbunden ist, dass die Trägermittel (12, 36) die Umsteuerungskörper passieren können und die Rotation des Servomotors durch erwähnte lineare Führung (38) zu vorzugsweise kombinierten linearen Bewegungen der erwähnten vorspringenden Werkzeugen übertragen können.

2. Vorrichtung nach Anspruch 1, **dadurch gekennzeichnet, dass** die endlose Rollenkette (30) eine starke Duplexkette umfasst, die um ein Duplexkettenrad (16) angeordnet ist, dass das erwähnte Antriebsrad ein Duplexkleinrad (22) umfasst, und dass der Servomotor (28) einen sogenannten Schrittmotor umfasst.

3. Vorrichtung nach Anspruch 1, **dadurch gekennzeichnet, dass** die erwähnten Trägermittel einen Gelenkzapfen (12) umfassen, der mit einer Führungsnut zusammenwirkt (10) und mit einer Rollenkette (30) mittels einem Klemmenelement (32) verbunden ist, das teilweise die Rollenkette umkränzt, und das durch Einspannen um ein Kettenglied der Rollenkette (30) von der externen Seite davon, dazu angepasst ist, befestigend zu sein - auf der Ebene mit erwähnter Führungsnut (10).

4. Vorrichtung nach Anspruch 1-3, **dadurch gekennzeichnet, dass** die erwähnte Führungsnut (10) hauptsächlich U-förmig ist, da sie eine vorzugsweise nach oben, horizontale Zwischenstreckung, zwei gewölbte Zwischenstreckungen und zwei senkrechte Zwischenstreckungen hat.

5. Vorrichtung nach Anspruch 1, **dadurch gekennzeichnet, dass** sie vorzugsweise zwei gleiche Kästen umfasst, wovon der hinterste vorzugsweise lateral seitenverkehrt ist, wo die Antriebsräder mittels einer Zwischenwelle gegenseitig verbunden sind (74), da die doppelte Vorrichtung von einem gemeinsamen Servomotor (28) getrieben wird.

## Revendications

1. Dispositif (2, 40, 54) de déplacement d'un objet dans une machine de travail et comprenant un carter (4) avec des parois antérieures et postérieures mutuellement parallèles (6, 8) entre lesquelles des organes de rotation (16, 44, 58) pour un organe de transport (30) ayant des organes d'entraînement (12, 36) sont arrangés, qui de préférence par une ouverture (10) dans la paroi postérieure (6) sont guidés en entraînement avec un dispositif de guidage linéaire (38) qui peut être déplacé dans les directions horisontale et verticale et qui possède un nombre d'outils en saillie adaptés au déplacement d'objets, et un servo-moteur (28) monté de préférence sur la paroi antérieure (8), **caractérisé en ce que** ledit organe de transport est constitué d'une chaîne à rouleaux sans fin (30), qui est arrangée autour desdits organes de rotation sous forme d'une roue à chaîne (16), un mécanisme de tendeur de chaîne (18) et une roue motrice (22) liée audit servo-moteur (28), que ladite ouverture est formée par une rainure de guidage (10) s'étendant aulong de la chaîne à rouleaux (30), et que lesdits organes d'entraînement (12, 36) sont liés à la chaîne à rouleaux (30) de sorte que les organes d'entraînement (12, 36) sont capables de passer les organes de rotation et de transférer la rotation du servo-moteur par ledit guidage linéaire (38) de préférence aux mouvements linéaires combinés desdits outils en saillie.

2. Dispositif selon la revendication 1, **caractérisé en ce que** la chaîne à rouleaux sans fin (30) est constituée d'une forte chaîne duplex arrangée autour de roue à chaîne duplex (16) que ladite roue motrice est constituée d'une roue de pignon duplex (22) et que le servo-moteur (28) est constitué d'un moteur dit pas-à-pas.

3. Dispositif selon la revendication 1, **caractérisé en ce que** des organes d'entraînement comprennent une tige de guidage (12) coopérant avec une rainure de guidage (10) et sont liés à une chaîne à rouleaux (30) au moyen d'un élément de serrage (32) qui partiellement entoure la chaîne à rouleaux (30) et étant disposé à être sécurer par serrage autour d'un maillon de chaîne de la chaîne à rouleaux (30) du côté extérieur de celle-ci - au plan de ladite rainure de guidage (10).

4. Dispositif selon la revendication 1 à 3, **caractérisé en ce que** ladite rainure de guidage (10) essentiellement présente la forme d'U, possédant de préférence une section intermédiaire en haut horisontale, deux sections intermédiaires courbées et deux sections intermédiaires verticales.

5. Dispositif selon la revendication 1, **caractérisé en ce qu'**il comprend deux carters de préférence uniformes, desquels le plus en arrière de préférence est latéralement inversé, les roues motrices étant mutuellement liées l'une à l'autre au moyen d'un arbre intermédiaire (74), comme le double dispositif est entraîné par un servo-moteur commun (28).
